(19) Europäisches Patentamt / European Patent Office / Office européen des brevets

(11) **EP 2 015 100 B1**

(12) **FASCICULE DE BREVET EUROPEEN**

(45) Date de publication et mention
de la délivrance du brevet:
**23.03.2016 Bulletin 2016/12**

(51) Int Cl.:
*G01S 1/68* *(2006.01)* *G01S 5/02* *(2006.01)*
*H01Q 21/28* *(2006.01)*

(21) Numéro de dépôt: **08012230.2**

(22) Date de dépôt: **07.07.2008**

(54) **Balise de détresse séparable pour giravion**

Abnehmbare Notfunkbake für Drehflügler

Separable distress beacon for rotorcraft

(84) Etats contractants désignés:
**GB IT**

(30) Priorité: **12.07.2007 FR 0705039**

(43) Date de publication de la demande:
**14.01.2009 Bulletin 2009/03**

(73) Titulaire: **Airbus Helicopters**
**13725 Marignane Cedex (FR)**

(72) Inventeur: **Dutruc, Hervé**
**13820 Ensues la Redonne (FR)**

(74) Mandataire: **GPI & Associés**
**EuroParc de Pichaury**
**Bâtiment B2 - 1er Etage**
**1330, rue Guillibert de la Lauzière**
**13856 Aix-en-Provence Cedex 3 (FR)**

(56) Documents cités:
JP-A- 11 177 462 US-A- 3 978 410
US-A1- 2006 022 882 US-B1- 6 208 269
US-B1- 6 411 260

## Description

La présente invention est relative à une balise de détresse séparable pour gitavions.

Le domaine technique de l'invention est celui de la fabrication de giravions.

La présente invention est plus particulièrement relative à une balise de détresse adaptée pour équiper un aéronef doté d'une antenne et pour être reliée à cette antenne.

Il est connu d'équiper un hélicoptère d'une antenne solidaire du fuselage et reliée à un émetteur radiofréquence, comme décrit par exemple dans le brevet FR-2743198.

Il est en particulier connu d'équiper un hélicoptère d'une balise de détresse comportant un boîtier équipé d'un connecteur, intégrant un émetteur radio et un organe de liaison reliant l'émetteur au connecteur, le connecteur permettant de connecter la balise - et son émetteur - soit à une antenne solidaire de l'hélicoptère, soit à une antenne auxiliaire portative.

Ceci permet à un occupant de l'hélicoptère, après un accident ayant endommagé l'antenne solidaire de l'hélicoptère, de connecter la balise à l'antenne auxiliaire et le cas échéant d'emporter avec lui la balise et l'antenne auxiliaire à distance de l'hélicoptère, de façon à déclencher ou maintenir l'émission par la balise d'un signal radio d'alerte.

L'activation de l'émetteur de la balise peut résulter de la détection d'un incident - tel qu'un choc - opérée par un circuit relié à un capteur de choc intégré à la balise, et/ou peut résulter de l'action manuelle d'un être humain sur un organe de déclenchement intégré à la balise, tel qu'un interrupteur.

Le brevet US-6411260 décrit une antenne pour une balise de détresse qui est conçue pour émettre des signaux de détresse à trois fréquences radio, i.e. 121.5 MHz, 243 MHz, et 406.025 MHz.

Le brevet FR-2660093 décrit un dispositif d'alimentation d'une balise émettant à cette dernière fréquence.

Les brevets FR-2776391, FR-2873451, JP-11177462 décrivent d'autres caractéristiques et utilisations de balises de détresse.

Concernant le document J-11177462, il décrit une balise montée à demeure dans un véhicule terrestre automobile, à double antenne interne / externe et émission commutable, selon le préambule de la revendication indépendante

Les balises de détresse pour aéronef présentent des inconvénients.

Notamment en cas de crash de l'aéronef, l'antenne solidaire de l'aéronef, l'antenne auxiliaire, le(s) câble(s) de liaison entre cette (ces) antenne(s) et l'émetteur, et/ou le connecteur intégré au boîtier de la balise peu(ven)t se rompre ou se détériorer, ce qui peut limiter ou empêcher l'émission d'un signal de détresse.

Par ailleurs, notamment en cas de crash et rupture de l'antenne solidaire de l'aéronef (ou de la liaison avec l'émetteur), les éventuels rescapés peuvent être dans l'incapacité de récupérer la balise et l'antenne auxiliaire portable, et/ou dans l'incapacité de les connecter et faire émettre la balise.

Un objectif de l'invention telle que définie par les revendications, est de remédier à ce problème.

Un objectif de l'invention est de proposer une balise de détresse pour aéronef qui soit améliorée et/ou qui remédie, en partie au moins, aux lacunes ou inconvénients des balises de détresse pour aéronef connues.

Selon un aspect de l'invention, il est proposé une balise de détresse comportant un boîtier équipé d'un connecteur séparable pour le raccordement de la balise à une antenne extérieure au boîtier, la balise comportant, à l'intérieur du boîtier :

-    un capteur sensible à un incident tel qu'un choc ou une immersion,

-    un émetteur,

-    un organe de détection et de commande qui est relié au capteur et à l'émetteur et est arrangé pour déclencher le fonctionnement de l'émetteur lorsqu'un incident est détecté,

-    une antenne intégrée,

-    un(e) bascule ou interrupteur intercalé(e) entre l'émetteur et le connecteur d'une part, et entre l'émetteur et l'antenne intégrée d'autre part, et

-    un organe sensible à la puissance électromagnétique Pi émise (par l'émetteur) et transmise (par l'interrupteur) vers le connecteur et à la puissance électromagnétique Pr renvoyée par le connecteur, i.e. sensible à l'adaptation d'impédance entre l'antenne extérieure et l'émetteur, lequel organe sensible est relié ou intégré à l'organe de détection et de commande, et est de préférence disposé entre la bascule et le connecteur,
l'organe de détection et de commande étant relié à la bascule et arrangé (en particulier programmé) pour commander la délivrance des signaux délivrés par l'émetteur à l'antenne extérieure ou bien à l'antenne intégrée, selon l'état de l'organe sensible.

Selon des modes préférés de réalisation de l'invention :

-    l'organe de détection et de commande est arrangé pour scruter l'état de l'organe sensible à intervalles de temps réguliers après la détection d'un incident ;

-    l'organe sensible est sensible au rapport d'ondes stationnaires ROS/VSWR dans une ligne de transmission reliant une sortie de la bascule au connecteur ;

- l'organe de détection et de commande est arrangé pour comparer le rapport d'ondes stationnaires ROS/VSWR à une valeur déterminée, à intervalles de temps réguliers après la détection d'un incident ;

- l'organe de détection et de commande est arrangé pour maintenir inchangé l'état ou position (pos1, pos2) de la bascule pendant une durée (temp1, temp2) déterminée ;

- l'antenne intégrée peut être une antenne à fente;

- l'émetteur est arrangé pour émettre des signaux à une ou plusieurs fréquences, en particulier à deux ou trois fréquences, notamment à au moins une des fréquences 121.5 MHz, 243 MHz, 406.025 MHz.

D'autres aspects, caractéristiques, et avantages de l'invention apparaissent dans la description suivante, qui se réfère aux dessins annexés et qui illustre, sans aucun caractère limitatif, des modes préférés de réalisation de l'invention.

La figure 1 est un schéma synoptique illustrant les principaux composants d'une balise selon l'invention dans une configuration d'émission d'un signal de détresse par une antenne extérieure au boîtier de la balise.

La figure 2 est un schéma synoptique de la balise de la figure 1 dans une configuration d'émission d'un signal de détresse par l'antenne interne au boîtier de la balise.

La figure 3 est un organigramme simplifié du mode de scrutation de l'adaptation d'impédance de la ligne de transmission des signaux de détresse vers le connecteur pour l'antenne extérieure, et de la commande du basculement temporisé entre les deux états/positions de la bascule de la balise selon l'invention.

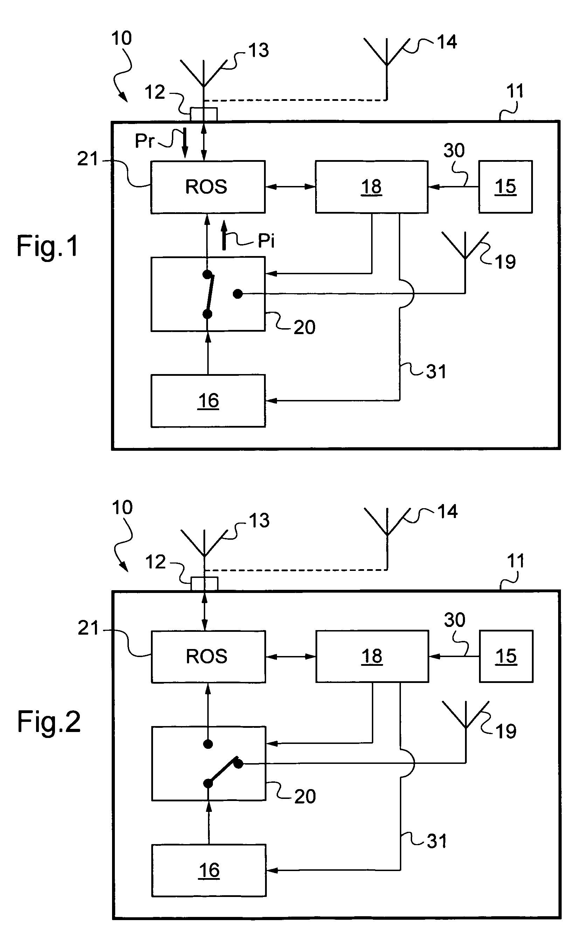

Par référence aux figures 1 et 2 notamment, la balise 10 comporte un boîtier 11 équipé d'un connecteur 12 pour le raccordement de la balise à une antenne (13 ou 14) extérieure au boîtier : soit une antenne 13 solidaire du fuselage d'un hélicoptère, soit une antenne 14 auxiliaire portative qui est embarquée à bord de l'hélicoptère et peut être connectée à la balise portative 10 par un occupant ayant constaté la détérioration de l'antenne 13 ou bien ayant quitté l'hélicoptère en emportant la balise et l'antenne auxiliaire.

La balise comporte, à l'intérieur du boîtier 11, un capteur 15 de choc tel qu'un accéléromètre piézoélectrique, un circuit émetteur 16 de signaux de détresse selon un format (amplitude, durée, modulation, fréquence, notamment) approprié, ainsi qu'un organe 18 de détection et de commande qui est relié au capteur 15 et à l'émetteur 16 par des liaisons respectives 30, 31.

L'organe 18 - tel qu'un circuit à microprocesseur - est programmé pour déclencher le fonctionnement de l'émetteur lorsqu'un choc est détecté.

La balise comporte en outre, à l'intérieur du boîtier, une antenne 19 intégrée, une bascule 20 interconnectée entre l'émetteur 16 et le connecteur 12 d'une part, et entre l'émetteur 16 et l'antenne 19 intégrée d'autre part, ainsi qu'un organe 21 sensible à la puissance électromagnétique Pi transmise vers le connecteur et à la puissance électromagnétique Pr renvoyée par le connecteur.

L'antenne intégrée peut être une antenne à fente.

L'organe sensible 21 est relié ou intégré à l'organe 18 de détection et de commande, et connecté entre la bascule 20 et le connecteur 12. L'organe 21 est ainsi sensible au rapport d'ondes stationnaires ROS/VSWR dans la ligne de transmission reliant une sortie de la bascule au connecteur.

L'organe 18 de détection et de commande est relié à la bascule et arrangé (en particulier programmé) pour commander la délivrance des signaux délivrés par l'émetteur à l'antenne extérieure 13 ou 14, ou bien à l'antenne intégrée 19, selon l'état de - ou niveau détecté par - l'organe sensible 21.

L'organe 18 de détection et de commande est en outre arrangé pour scruter l'état de l'organe sensible 21 à intervalles de temps réguliers (après la détection d'un incident). L'organe 18 de détection et de commande est en particulier arrangé pour comparer le rapport d'ondes stationnaires ROS/VSWR à une valeur déterminée, à intervalles de temps réguliers, après la détection d'un incident.

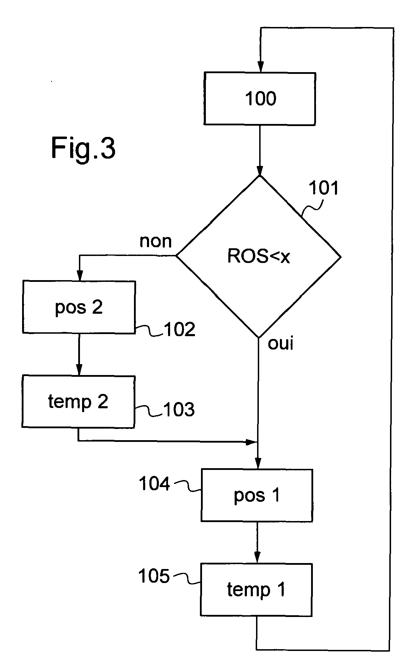

Comme illustré figure 3, l'organe 18 de détection et de commande est également programmé pour maintenir inchangé l'état ou position (pos1 ou pos2 correspondant respectivement aux figures 1 et 2) de la bascule pendant une durée (temp1, temp2) déterminée : après une commande de basculement (de l'interrupteur 20 figures 1 et 2) dans la position pos1 (étape 104) ou dans la position pos2 (étape 102), une nouvelle scrutation (étape 100) de la valeur du ROS suivie de la comparaison (étape 101) de cette valeur à la valeur x déterminée, n'intervient qu'après écoulement d'une durée déterminée, respectivement la durée temp1 (étape 105) ou la durée temp2 (étape 103).

Conformément à un aspect de l'invention, l'antenne intégrée à la balise est utilisée pour émettre un signal de détresse uniquement si l'antenne extérieure est détériorée ou déconnectée. Cette détérioration ou déconnexion peut être détectée par la mesure du rapport ROS ou VSWR (« voltage standing-wave ratio ») au niveau de la ligne de transmission entre l'interrupteur/bascule et l'émetteur :

* lorsqu'une valeur du rapport ROS est inférieure à une valeur prédéterminée x - par exemple 3 -, l'unité de commande 18 provoque le basculement - ou le maintien - de l'interrupteur 20 vers - respectivement dans - la position pos1 correspondant à la configuration illustrée figure 1, dans laquelle l'antenne extérieure est utilisée pour émettre le signal de détresse fourni par l'émetteur, l'antenne intégrée 19 n'étant alors pas utilisée ;

* lorsqu'à contrario la valeur du rapport ROS est supérieure à la valeur prédéterminée x, l'unité de commande 18 provoque le basculement - ou le maintien - de l'interrupteur 20 vers - respectivement dans - la position pos2 correspondant à la configuration illustrée figure 2, dans laquelle l'antenne intégrée 19 est utilisée pour émettre le signal de détresse fourni par l'émetteur, l'antenne extérieure 13 ou 14 n'étant alors pas utilisée.

Le ROS (rapport d'ondes stationnaires) est défini par :

$$\text{ROS} = \frac{1 + \sqrt{\dfrac{Pr}{Pi}}}{1 - \sqrt{\dfrac{Pr}{Pi}}}$$

Pr correspondant à la puissance retour (du connecteur 12 vers la bascule 20), et Pi correspondant à la puissance incidente (de la bascule 20 vers le connecteur 12).

Lorsqu'une antenne n'est pas adaptée à l'impédance de l'émetteur, une partie du signal est retournée vers l'émetteur. Un couple émetteur/antenne idéalement réglé n'engendre pas de perte de puissance, le ROS est alors égal à 1, Pr étant nulle. Une antenne extérieure déconnectée de l'émetteur engendre au contraire une puissance totalement renvoyée vers l'émetteur (Pr = Pi), ce qui donne un ROS de valeur théorique infinie.

Ainsi, le dépassement par le rapport ROS de la valeur x signifie soit que l'antenne extérieure est cassée soit que la liaison émetteur/antenne extérieure est rompue ; la détection par l'unité 18 de ce dépassement provoque alors une activation, par l'unité 18 et la bascule 20, de l'antenne interne à la balise.

Grâce à l'invention, en cas de crash, l'émission du signal de détresse sera indépendante des évènements suivants :

- casse de l'antenne extérieure,

- casse d'un câble coaxial reliant le connecteur de la balise à l'antenne extérieure,

- incapacité des occupants de l'aéronef à récupérer et connecter l'émetteur et l'antenne externe (auxiliaire) portable.

En outre, la logique d'activation de la bascule par l'unité de commande 18, en cas d'activation manuelle du signal de détresse par un occupant de l'aéronef agissant sur la balise, privilégie l'émission par l'antenne 13 fixe (lorsque la balise n'a pas été extraite de l'aéronef) : on obtient ainsi un signal de détresse de qualité quelque soit le cas de figure. Le basculement vers l'antenne 19 intégrée à la balise ne se fait que lorsque la balise est séparée de l'hélicoptère ou bien lorsque l'antenne externe (principale fixe ou auxiliaire portative) est hors service.

## Revendications

1. Balise (10) de détresse pour giravion apte à être séparée de ce giravion et à être récupérée en cas de crash, comportant : un boîtier (11) avec une antenne (19) intégrée, une antenne (13, 14) extérieure au boîtier (11), le boîtier (11) étant raccordé à l'antenne (13, 14) extérieure au boîtier (11), un capteur (15) d'incident, un émetteur (16), un organe (18) de détection et de commande qui est relié au capteur (15) et à l'émetteur (16) et est arrangé pour déclencher le fonctionnement de l'émetteur lorsqu'un incident est détecté, une bascule (20) étant intercalée entre l'émetteur (16) et l'antenne (13, 14) extérieure d'une part, et entre l'émetteur et l'arttenne (19) intégrée d'autre part, et un organe (21) sensible à la puissance électromagnétique (Pi) transmise vers l'antenne (13, 14) extérieure et à la puissance électromagnétique (Pr) renvoyée par cette antenne (13, 14) extérieure, ledit organe sensible (21) étant relié ou intégré à l'organe (18) de détection et de commande, **caractérisée en ce que** ledit boîtier (11) est équipé d'un connecteur (12) séparable de liaison à l'antenne (13, 14) extérieure ;

et **en ce que** l'antenne (13, 14) extérieure est solidaire du fuselage du giravion ;

et **en ce que** l'organe (18) de détection et de commande est relié à la bascule (20) et au connecteur (12) séparable pour commander la délivrance des signaux délivrés par l'émetteur (16) soit à l'antenne (13, 14) extérieure soit à l'antenne (19) intégrée, selon l'état de l'organe sensible (21) et du connecteur (12) séparable; ledit organe (18) de détection et de commande étant programmé pour scruter l'état de l'organe sensible (21) à intervalles de temps réguliers après la détection d'un incident, cet organe (21) sensible mesurant le rapport d'ondes stationnaires ROS (VSWR) dans une ligne de transmission reliant une sortie de la bascule (20) audit connecteur (12) séparable.

2. Balise (10) selon la revendication 1, **caractérisée**

**en ce que** l'organe (18) de détection et de commande est arrangé pour comparer le rapport d'ondes stationnaires ROS (VSWR) à une valeur déterminée, à intervalles de temps réguliers après la détection d'un incident.

3. Balise (10) selon l'une des revendications 1 à 2, **caractérisée en ce que** l'organe (18) de détection et de commande est arrangé pour maintenir inchangé l'état ou position (pos1, pos2) de la bascule pendant une durée (temp1, temp2) déterminée.

4. Balise (10) selon l'une des revendications 1 à 3, **caractérisée en ce que** l'antenne intégrée est une antenne à fente.

5. Balise (10) selon l'une des revendications 1 à 4, **caractérisée en ce que** l'émetteur est arrangé pour émettre des signaux à au moins deux ou trois fréquences.

6. Balise (10) selon l'une des revendications 1 à 5, **caractérisée en ce que** l'émetteur est arrangé pour émettre des signaux à au moins une des fréquences 121.5 MHz, 243 MHz, 406.025 MHz.


**Patentansprüche**

1. Notfallhake (10) für ein Drehflügelflugzeug, welche von diesem Drehflügelflugzeug getrennt werden kann und im Fall eines Crashs wieder aufgesammelt werden kann, mit: einem Gehäuse (11) mit einer integrierten Antenne (19), einer Antenne (13, 14) außerhalb des Gehäuses (11), wobei das Gehäuse (11) mit der Antenne (13, 14) außerhalb des Gehäuses (11) verbunden ist, einem Störfalldetektor (15), einem Sender (16), einem Erfassungs- und Steuerorgan (18), das mit dem Detektor (15) und dem Sender (16) verbunden ist und so ausgebildet ist, dass es den Betrieb des Senders auslöst, wenn ein Störfall erfasst wird, wobei ein Kippschalter (20) zwischen dem Sender (16) und der äußeren Antenne (13, 14) einerseits und zwischen dem Sender und der integrierten Antenne (19) andererseits angeordnet ist, und mit einem Element (21), das empfindlich ist für die zur Außenantenne (13, 14) gesendete elektromagnetische Leistung (Pi), die zur Außenantenne (13, 14) übertragen wird, und für die elektromagnetische Leistung (Pr), die von dieser Außenantenne (13, 14) zurückgesendet wird, wobei das empfindliche Element (21) mit dem Erfassungs- und Steuerorgan (18) verbunden ist oder in dieses integriert ist, **dadurch gekennzeichnet, dass** das Gehäuse (11) mit einem lösbaren Stecker (12) zur Verbindung mit der Außenantenne (13, 14) ausgerüstet ist, und dadurch, dass die Außenantenne (13, 14) fest mit dem Rumpf des Drehflügelflugzeugs verbunden ist, und

dadurch, dass das Erfassungs- und Steuerorgan (18) mit dem Kippschalter (20) und dem lösbaren Stecker (12) verbunden ist, um das Senden von von dem Sender (16) gelieferten Signalen, entweder an die Außenantenne (13, 14) oder an die integrierte Antenne (19) zu steuern, je nach dem Zustand des empfindlichen Elements (21) und des lösbaren Steckers (12), wobei das Erfassungs- und Steuerorgan (18) programmiert ist, um den Zustand des empfindlichen Elements (21) in regelmäßigen Zeitintervallen nach dem Erfassen eines Störfalls zu prüfen, wobei dieses empfindliche Element (21) das Stehwellenverhältnis ROS (VSWR) in einer Übertragungsleitung misst, die einen Ausgang des Kippschalters (20) mit dem lösbaren Stecker (12) verbindet.

2. Bake (10) nach Anspruch 1, **dadurch gekennzeichnet, dass** das Erfassungs- und Steuerorgan (18) so ausgebildet ist, dass es das Stehwellenverhältnis (ROS) (VSWR) mit einem vorbestimmten Wert in regelmäßigen Zeitintervallen nach der Erfassung eines Störfalls vergleicht.

3. Bake (10) nach einem der Ansprüche 1 bis 2, **dadurch gekennzeichnet, dass** das Erfassungs- und Steuerorgan (18) so ausgebildet ist, dass es den Zustand oder die Stellung (pos1, pos2) des Kippschalters während einer vorbestimmten Zeitdauer (temp1, temp2) unverändert lässt.

4. Bake (10) nach einem der Ansprüche 1 bis 3, **dadurch gekennzeichnet, dass** die integrierte Antenne eine Schlitzantenne ist.

5. Bake (10) nach einem der Ansprüche 1 bis 4, **dadurch gekennzeichnet, dass** der Sender zum Senden von Signalen mit mindestens zwei oder drei Frequenzen ausgebildet ist.

6. Bake (10) nach einem der Ansprüche 1 bis 5, **dadurch gekennzeichnet, dass** der Sender zum Senden von Signalen mit mindestens einer der Frequenzen 121,5 MHz, 243 MHz, 406,025 MHz ausgebildet ist.


**Claims**

1. An emergency beacon (10) for a rotorcraft, which is suitable for being separated from this rotorcraft and recovered in the event of a crash, comprising: a casing (11) with an integrated antenna (19), an antenna (13, 14) external to the casing (11), the casing (11) being connected to the antenna (13, 14) which is external to the casing (11), an incident sensor (15), a transmitter (16), a detection and control element (18) which is connected to the sensor (15) and to the transmitter (16) and is arranged to trigger operation of the transmitter when an incident is detected, a changeover switch (20) being inserted between the transmitter (16) and the external antenna (13, 14) on one hand, and between the transmitter and the integrated antenna (19) on the other hand, and a sensitive element (21) which is sensitive to the electromagnetic power (Pi) transmitted to the external antenna (13, 14) and to the electromagnetic power (Pr) returned by this external antenna (13, 14), said sensitive element (21) being connected to or integrated in the detection and control element (18), **characterised in that** said casing (11) is equipped with a separable connector (12) for connection to the external antenna (13, 14);
and **in that** the external antenna (13, 14) is integral with the fuselage of the rotorcraft; and **in that** the detection and control element (18) is connected to the changeover switch (20) and to the separable connector (12) in order to control the delivery of the signals provided by the transmitter (16) either to the external antenna (13, 14) or to the integrated antenna (19), depending on the state of the sensitive element (21) and the separable connector (12); said detection and control element (18) being programmed to scan the state of the sensitive element (21) at regular time intervals after an incident has been detected, this sensitive element (21) measuring the standing wave ratio ROS (VSWR) in a transmission line connecting an output of the changeover switch (20) to said separable connector (12).

2. A beacon (10) according to Claim 1, **characterised in that** the detection and control element (18) is arranged to compare the standing wave ratio ROS (VSWR) to a determined value, at regular time intervals after an incident has been detected.

3. A beacon (10) according to one of Claims 1 to 2, **characterised in that** the detection and control element (18) is arranged to keep the state or position (pos1, pos2) of the changeover switch unchanged for a determined duration (temp1, temp2).

4. A beacon (10) according to one of Claims 1 to 3, **characterised in that** the integrated antenna is a slot antenna.

5. A beacon (10) according to one of Claims 1 to 4, **characterised in that** the transmitter is arranged to transmit signals at at least two or three frequencies.

6. A beacon (10) according to one of Claims 1 to 5, **characterised in that** the transmitter is arranged to transmit signals at at least one of the frequencies 121.5 MHz, 243 MHz, 406.025 MHz.

Fig.1

Fig.2

Fig.3

100

101

non ROS<x

pos 2
102

temp 2
103

oui

104 pos 1

105 temp 1

**EP 2 015 100 B1**

## RÉFÉRENCES CITÉES DANS LA DESCRIPTION

**Documents brevets cités dans la description**

- FR 2743198
- US 6411260 B
- FR 2660093
- FR 2776391
- FR 2873451
- JP 11177462 B